# EUROPÄISCHE PATENTSCHRIFT

(11) **EP 1 068 449 B1**
(45) Veröffentlichungstag und Bekanntmachung des Hinweises auf die Patenterteilung: **28.07.2004**
(21) Anmeldenummer: 99955785.3
(22) Anmeldetag: 24.09.1999
(51) Int. Cl.: F04B 1/04

(54) **PUMPENAGGREGAT FÜR EINE SCHLUPFGEREGELTE, HYDRAULISCHE FAHRZEUGBREMSANLAGE**
PUMP UNIT FOR A SLIP-REGULATED HYDRAULIC AUTOMOBILE BRAKE SYSTEM
GROUPE MOTOPOMPE POUR DISPOSITIF DE FREINAGE HYDRAULIQUE A REGULATION ANTIPATINAGE D'UN VEHICULE

(30) Priorität: 06.02.1999 DE 19904926
(43) Veröffentlichungstag der Anmeldung: 17.01.2001
(73) Patentinhaber: ROBERT BOSCH GMBH, 70442 Stuttgart (DE)
(72) Erfinder: SCHAEFER, Ernst-Dieter, D-74336 Brackenheim (DE)
(86) Internationale Anmeldenummer: PCT/DE1999/003063
(87) Internationale Veröffentlichungsnummer: WO 2000/046503

(56) Entgegenhaltungen:
- WO-A-88/02070
- DE-A- 3 701 168
- GB-A- 1 242 851
- US-A- 5 395 219
- PATENT ABSTRACTS OF JAPAN vol. 007, no. 124 (M-218), 28. Mai 1983 (1983-05-28) & JP 58 041278 A (TEIKOKU DENKI SEISAKUSHO:KK), 10. März 1983 (1983-03-10)

## Beschreibung

### Stand der Technik

Die Erfindung betrifft ein Pumpenaggregat für eine schlupfgeregelte, hydraulische Fahrzeugbremsanlage mit den Merkmalen des Oberbegriffs des Anspruchs 1.

Ein derartiges Pumpenaggregat ist bekannt aus der DE 42 39 361 A1. Als Pumpenmotor weist das bekannte Pumpenaggregat einen Elektromotor auf, auf dessen Motorwelle ein Exzenter drehfest angebracht ist. An einem Umfang des Exzenters liegt ein Pumpenkolben einer Kolbenpumpe des Pumpenaggregats mit einer Stirnfläche an. Der Pumpenkolben ist in einer Zylinderbohrung eines Pumpengehäuses axial verschieblich aufgenommen. Dabei kann der Pumpenkolben unmittelbar im Pumpengehäuse oder in einer in das Pumpengehäuse eingesetzten Laufbuchse axial verschieblich geführt sein. Durch rotierenden Antrieb des Exzenters mit dem Pumpenmotor wird der am Umfang des Exzenters anliegende Pumpenkolben zu einer in axialer Richtung hin- und hergehenden Hubbewegung in der Zylinderbohrung angetrieben, die in für Kolbenpumpen an sich bekannter Weise eine Förderung von Bremsflüssigkeit bewirkt. Als Exzenter kann beispielsweise auch eine Kurbel (Kurbelwelle) Verwendung finden, die den Pumpenkolben über ein Pleuel antreibt.

Der Exzenter ist in einem Exzenterraum des Pumpengehäuses angeordnet, in den die Zylinderbohrung mündet. Der Pumpenmotor ist am oder im Pumpengehäuse angebracht. Die Kolbenpumpe weist eine exzenterseitige Dichtung nahe dem Exzenterrraum auf, die einen Übertritt von mit der Kolbenpumpe zu fördernder Bremsflüssigkeit in den Exzenterraum verhindern soll. Diese Dichtung kann ein Dichtelement, beispielsweise einen Dichtring aufweisen, eine Abdichtung kann auch unmittelbar zwischen der Zylinderbohrung und einer Umfangsfläche des Pumpenkolbens ohne separates Dichtelement erfolgen. Auch dies soll unter Dichtung im Sinne der vorliegenden Erfindung verstanden werden. Trotz der Dichtung kann Bremsflüssigkeit aus der Kolbenpumpe als Leckageströmung zwischen der Zylinderbohrung und einer Umfangsfläche des Pumpenkolbens hindurch in den Exzenterraum gelangen. Zum einen kann der Pumpenkolben infolge seiner Hubbewegung an seiner Umfangsfläche haftende Bremsflüssigkeit als sog. Schleppströmung an der Dichtung vorbei in den Exzenterraum fördern, zum anderen kann die Dichtwirkung der Dichtung durch Verschleiß nachlassen. Um ein Ansammeln der Bremsflüssigkeit im Exzenterraum zu vermeiden, ist das Pumpengehäuse des bekannten Pumpenaggregats mit einer Bohrung als Ablauf versehen, der vom Exzenterraum nach unten ins Freie führt. Um ein Eindringen von Wasser zu verhindern, ist im Ablauf ein Rückschlagventil angebracht.

Das bekannte Pumpenaggregat hat den Nachteil, daß es das Rückschlagventil zusätzlich benötigt, und daß das Rückschlagventil beim Zusammenbau des Pumpenaggregats in den Ablauf eingesetzt werden muß, was zusätzlichen Montageaufwand bedeutet. Durch eindringenden Schmutz kann zudem die Schließfunktion des Rückschlagventils beeinträchtigt werden.

Aus der DE 197 12 686 A1 ist ein Pumpenaggregat der vorstehend beschriebenen Art bekannt, bei dem ein poröser und dadurch für die Bremsflüssigkeit durchlässiger Sintermetallkörper in eine den Ablauf bildende eingesetzt ist. Dieses Pumpenaggregat hat den Nachteil, daß Öl aus einem Exzenter- oder aus einem Motorlager in den Ablauf gelangen kann. Dieses Öl verringert die Durchlässigkeit des Sintermetallkörpers und verstopft diesen mit der Zeit ganz.

Die beiden bekannten Pumpenaggregate haben gemeinsam den Nachteil, daß Leckage-Bremsflüssigkeit aus der Kolbenpumpe zunächst in den Exzenterraum gelangt, bevor sie in den Ablauf fließt. Aus dem Exzenterraum kann die Bremsflüssigkeit an das Exzenterlager gelangen oder in den Elektromotor eindringen. Die Bremsflüssigkeit zerstört einen Schmierfilm der Lager und führt dadurch zu deren Zerstörung. Im Elektromotor kann die Bremsflüssigkeit zu einem Kurzschluß und damit zur Zerstörung des Elektromotors führen.

Ähnliche Pumpenaggregate sind beispielsweise auch aus des WO 88/02070 bekannt.

### Vorteile der Erfindung

Beim erfindungsgemäßen Pumpenaggregat mit den Merkmalen des Anspruchs 1 mündet der Ablauf zwischen der exzenterseitigen Dichtung und dem Exzenterraum in die Zylinderbohrung. Leckageflüssigkeit aus der Kolbenpumpe, die die exzenterseitige Dichtung überwunden hat, fließt durch den Ablauf aus der Zylinderbohrung ab, bevor sie den Exzenterraum erreicht. Dadurch wird vermieden, daß Leckageflüssigkeit aus der Kolbenpumpe bis in den Exzenterraum gelangt. Es kommt nicht zu einem grundsätzlich unerwünschten Vermischen von Leckageflüssigkeit (Bremsflüssigkeit) mit Schmier- oder Lageröl eines Exzenter- oder Motorlagers. Da keine Leckageflüssigkeit aus der Kolbenpumpe bis in den Exzenterraum gelangt, ist ausgeschlossen, daß Leckageflüssigkeit an ein Exzenter- oder Motorlager oder in den Pumpenmotor gelangt. Beschädigungen eines Exzenter- oder Motorlagers oder des Pumpenmotors durch Bremsflüssigkeit sind dadurch ausgeschlossen. Ebenso wird vermieden, daß Öl aus einem Exzenter- oder Motorlager in den Ablauf gelangt und einen eventuell vorhandenen Sinterkörper verstopfen kann. Der Ablauf der Leckageflüssigkeit ist somit dauerhaft gewährleistet.

Das erfindungsgemäße Pumpenaggregat ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenen Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Die Unteransprüche haben vorteilhafte Ausgestaltungen und Weiterbildungen der im Anspruch 1 angegebenen Erfindung zum Gegenstand.

Die Anordnung eines flüssigkeitsdurchlässigen Rings in einer den Pumpenkolben umgebenden Nut gemäß Anspruch 3 hat den Vorteil, daß der flüssigkeitsdurchlässige Ring an einem inneren oder kolbenseitigen Ende des Ablaufs und damit wassergeschützt angeordnet ist.

### Zeichnung

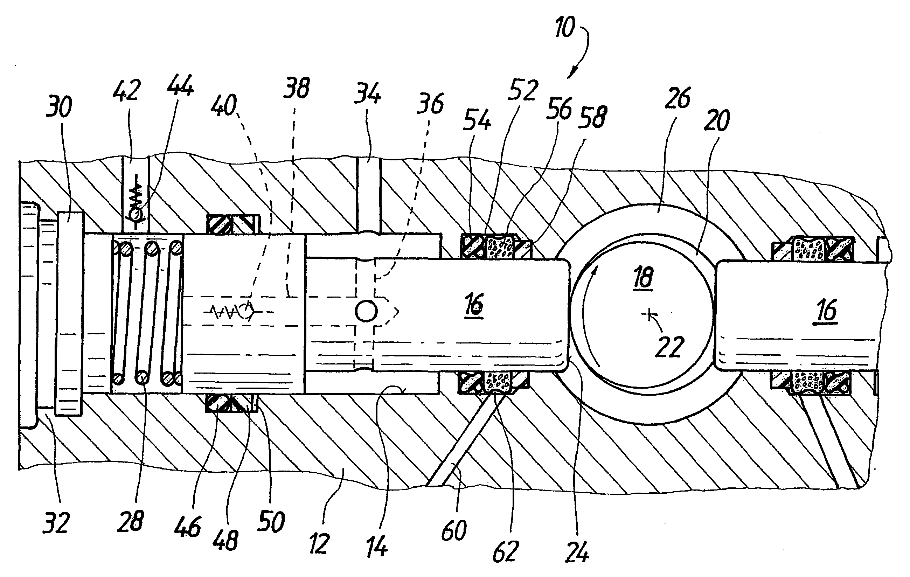

Die Erfindung wird nachfolgend anhand eines bevorzugt ausgewählten und in der Zeichnung dargestellten Ausführungsbeispiels näher erläutert. Die einzige Figur zeigt ein erfindungsgemäßes Pumpenaggregat in vereinfachter Darstellung im Schnitt.

### Beschreibung des Ausführungsbeispiels

Das insgesamt mit 10 bezeichnete, erfindungsgemäße Pumpenaggregat ist in einen Hydraulikblock 12 einer im übrigen nicht dargestellten, schlupfgeregelten hydraulischen Fahrzeugbremsanlage eingesetzt. In den Hydraulikblock 12, von dem in der Zeichnung der übersichtlichen Darstellung wegen lediglich ein das Pumpenaggregat 10 umgebendes Bruchstück dargestellt ist, sind weitere hydraulische Bauelemente wie Magnetventile, Hydrospeicher und Dämpferkammer eingesetzt und hydraulisch miteinander und mit dem Pumpenaggregat 10 verschaltet. Der Hydraulikblock 12 ist in an sich bekannter Weise über eine Bremsleitung an einen mit einem Fußbremspedal oder einem Handbremshebel betätigbaren, nicht dargestellten Bremszylinder angeschlossen, an den Hydraulikblock 12 sind über Bremsleitungen nicht dargestellte Radbremszylinder angeschossen. Der Hydraulikblock 12 bildet ein Pumpengehäuse des erfindungsgemäßen Pumpenaggregats 10 und wird nachfolgend als solches bezeichnet.

Im Pumpengehäuse 12 ist eine durchgehende Zylinderbohrung 14 angebracht, in die zwei Pumpenkolben 16 axial verschieblich eingesetzt sind. Das Pumpengehäuse 12 mit der Zylinderbohrung 14 und je ein Pumpenkolben 16 bilden je eine Kolbenpumpe 12, 14, 16. Zwischen den beiden Pumpenkolben 16 ist ein Exzenter 18 angeordnet, der als Zapfen ausgebildet und exzentrisch sowie einstückig an einem Ende einer Motorwelle 20 angeordnet ist. Die Motorwelle 20 ist Teil eines als Elektromotor ausgebildeten Pumpenmotors, der sich in der Zeichnung hinter der Bildebene befindet und der deswegen vom Pumpengehäuse 12 verdeckt und nicht sichtbar ist. Der Pumpenmotor ist am Pumpengehäuse 12 befestigt. Eine Drehachse 22 der Motorwelle 20, die zugleich Drehachse 22 des Exzenters 18 ist, schneidet eine gedachte Achse der beiden Pumpenkolben 16 und der Zylinderbohrung 14 rechtwinklig. Die Pumpenkolben 16 befinden sich in einer sog. Boxeranordnung.

Die Pumpenkolben 16 liegen mit ihren dem Exzenter 18 zugewandten Stirnflächen 24 am Umfang des Exzenters 18 an. Der Exzenter 18 befindet sich in einem zylindrischen Exzenterraum 26 im Pumpengehäuse 12, in den die beiden Pumpenkolben 18 mit ihren Enden hineinragen. Die Zylinderbohrung 14 mündet an zwei einander diametral gegenüberliegenden Stellen des Umfangs in den Exzenterraum 26.

Auf einer dem Exzenter 18 abgewandten Seite ist je eine Kolbenrückstellfeder 28 in Form einer Schraubendruckfeder in die Zylinderbohrung 14 eingesetzt, die die Pumpenkolben 16 auf einander gegenüberliegenden Seiten gegen den Umfang des Exzenters 18 drückt. Die Kolbenrückstellfeder 28 stützt sich gegen einen Verschlußstopfen 30 ab, der auf einer dem Exzenter 18 abgewandten Seite in die Zylinderbohrung 14 eingesetzt ist. Durch eine umlaufende Verstemmung 32 des Pumpengehäuses 12 ist der Verschlußstopfen 30 fluiddicht und druckfest in der Zylinderbohrung 14 gehalten.

Im dargestellten Ausführungsbeispiel sind die Pumpenkolben 16 als Stufenkolben ausgebildet. Stufenkolben sind allerdings nicht zwingend für die Erfindung, diese ist ebenso an einem Pumpenaggregat mit stufenlosen Kolben ausführbar (nicht dargestellt). Eine Einlaßbohrung 34 mündet in einem mittleren Bereich der Pumpenkolben 16 quer in die Zylinderbohrung 14. Durch die Zylinderbohrung 14 kommunizieren kreuzweise im Pumpenkolben 16 angebrachte Querbohrungen 36 mit der Einlaßbohrung 34, von denen eine axiale Sackbohrung 38 zu der dem Exzenter 18 ab- und dem Verschlußstopfen 30 zugewandten Stirnseite des Pumpenkolbens 16 führt. Der Pumpenkolben 16 weist ein integriertes, in seiner Sackbohrung 38 angeordnetes Einlaßventil 40 in Form eines federbelasteten Rückschlagventils auf, das in der Zeichnung der besseren Übersichtlichkeit wegen als Symbol dargestellt ist. Eine Auslaßbohrung 42 ist in Höhe zwischen dem Pumpenkolben 16 und dem Verschlußstopfen 30 quer zur Zylinderbohrung 14 im Pumpengehäuse 12 angebracht. In die Auslaßbohrung 42 ist ein als federbelastetes Rückschlagventil ausgebildetes Auslaßventil 44 eingesetzt, das in der Zeichnung der besseren Übersichtlichkeit wegen als Symbol dargestellt ist. Das Einlaßventil 40 und das Auslaßventil 44 steuern den Fluidduchhfluß durch die Kolbenpumpe 12, 14, 16 in an sich bekannter Weise.

Durch rotierenden Antrieb der Motorwelle 20 und des mit ihr einstückigen Exzenters 18 werden die beiden Pumpenkolben 16 zu einer hin- und hergehenden Hubbewegung angetrieben, wodurch in an sich bekannter Weise Bremsflüssigkeit durch das Einlaßventil 40 angesaugt und durch das Auslaßventil 44 ausgestoßen wird. Auf einer dem Exzenter 18 abgewandten Seite dichtet ein Dichtring 46 zwischen Saug- und Druckseite der Kolbenpumpe 12, 14, 16, also zwischen der Einlaßbohrung 34 und einem Druckraum, in den die Kolbenrückstellfeder 28 eingesetzt ist, ab. Ein Führungsring 46 führt den Pumpenkolben 16 axial verschieblich im Pumpengehäuse 12. Der Dichtring 46 und der Führungsring 48 sind in eine gemeinsame Nut 50 im Pumpengehäuse 12 eingesetzt. Auf einer dem Exzenter 18 zugewandten Seite ist das Pumpengehäuse 12 ebenfalls mit einer den Pumpenkolben 16 umgebenden Nut 52 versehen, in die ein Dichtring 54, der zwischen der Saugseite (Einlaßbohrung 34) der Kolbenpumpe 12, 14, 16 und dem Exzenterraum 26 abdichtet, ein poröser Metallsinterring 56 und ein Stützring 58 eingesetzt sind. Der Dichtring 54 ist dem Exzenter 18 abgewandt, der Stützring 58 dem Exzenter 18 zugewandt und der Metallsinterring 56 dazwischen in der Nut 52 angeordnet.

Der Dichtring 54 bildet eine exzenterseitige Dichtung. Der Dichtring 54 dient zum Abdichten zwischen der Niederdruckseite der Kolbenpumpe 12, 14, 16 und dem Exzenterraum 26. Der Stützring 58 ist als Abstreifring, der am Pumpenkolben 16 haftende Bremsflüssigkeit auf der Seite des Metallsinterrings 56 hält, und als Führungsring für den Pumpenkolben 16 vorgesehen. Bei Verschleiß des Stützrings 58 unterstützt der Metallsinterring 56 die Funktion, den Pumpenkolben 16 zu führen. Ggf. kann auf den Stützring 58 verzichtet werden und die Führung des Pumpenkolbens 16 durch den Metallsinterring 56 erfolgen. Des weiteren dient der Metallsinterring 56 der Ableitung der Bremsflüssigkeit. Aufgrund seiner Porosität ist der Metallsinterring 56 durchlässig für Bremsflüssigkeit. Bremsflüssigkeit (Leckageflüssigkeit), die aufgrund einer Schleppwirkung des Pumpenkolbens 16 bei seiner hin- und hergehenden Hubbewegung oder aufgrund von Verschleiß/Undichtigkeit des Dichtrings 54 den Dichtring 54 in Richtung des Exzenters 18 überwindet, gelangt in den porösen Metallsinterring 56, der aufgrund seiner Porosität die Bremsflüssigkeit aufsaugt und vorübergehend speichert. Da der Metallsinterring 56 durchlässig für die Bremsflüssigkeit ist, gibt er die Bremsfl_üssigkeit wieder ab, so daß die Bremsflüssigkeit in die Nut 52 gelangt, in die der Metallsinterring 56 eingesetzt ist. Der Metallsinterring 56 leitet Leckageflüssigkeit aufgrund einer Kapillarwirkung ab. Aus der Nut 52 gelangt die Bremsflüssigkeit in eine einen Ablauf 60 bildende Bohrung, die in einer betriebsmäßigen, üblichen Einbaulage des Pumpenaggregats 10 von der Nut 52 schräg durch das Pumpengehäuse 12 nach unten ins Freie führt.

Um die Leckageflüssigkeit in den Ablauf 60 abzuleiten, weist der Metallsinterring 56 an seiner Außenumfangsfläche eine rinnenförmige Freinut 62 auf, die einen den Metallsinterring 56 umgebenden, ringförmigen Freiraum in der Nut 52 im Pumpengehäuse 12 bewirkt. Die Freinut 62 bewirkt eine freie und drucklose Ableitung von Leckageblüssigkeit in den Ablauf 60. Die Freinut 62 verhindert einen Druckaufbau im Außenbereich des Metallsinterrings 56 beispielsweise infolge von Kapillarwirkung. Die Freinut kann ebenso den Metallsinterring 56 umgebend am Grund der Nut 52 im Pumpengehäuse 12 angebracht sein (nicht dargestellt). Die Freinut 62 und der Ablauf 60 verhindern, daß Bremsflüssigkeit, die am exzenterseitigen Dichtring 54 aus der Kolbenpumpe 12, 14, 16 ausgetreten ist, in den Exzenterraum 26 gelangt, wo sie die Schmierung des Exzenters 18 oder eines Lagers des Elektromotors beeinträchtigen und in den Elektromotor eindringen könnte. Neben seiner Sammel- und Ableitfunktion für austretende Bremsflüssigkeit verhindert der Metallsinterring 56 auch das Eindringen von Wasser oder Schmutz in die Kolbenpumpe12, 14, 16 oder den Exzenterraum 26.

Eine sog. Watfähigkeit, also die Möglichkeit mit einem mit dem erfindungsgemäßen Pumpenaggregat 10 ausgerüsteten Fahrzeug Wasser zu durchfahren, wobei das Pumpenaggregat 10 in das Wasser eingetaucht wird, ist gegeben. Wird das Pumpenaggregat 10 beispielsweise 0,5 m unter Wasser getaucht, so ist das Pumpenaggregat 10 einem Überdruck von 0,05 bar ausgesetzt. Dieser Überdruck bewirkt, daß in dem Ablauf 60 befindliche Luft auf 95 % ihres ursprünglichen Volumens komprimiert wird, d. h. das Wasser dringt auf 5 % der Länge des Ablaufs 60 in diesen ein. Das Wasser gelangt somit nicht annähernd bis zur Nut 52 und dem Metallsinterring 56.

Zugleich vermeidet das erfindungsgemäße Pumpenaggregat 10, daß Lageröl aus dem Elektromotor oder Schmieröl vom Exzenter 18 an den Metallsinterring 56 gelangt und dessen Durchlässigkeit für Bremsflüssigkeit herabsetzt oder den Metallsinterring 56 verstopft.

Auch eine schräge Anordnung des Ablaufs 60 dient dem Zweck, das Eindringen von Wasser zu verhindern, da sie Spritzwasser abweist. Desweiteren verlängert die schräge Anordnung des Ablaufs 60 dessen Länge, was zusätzlich verhindert, daß Wasser bis an den Metallsinterring 56 gelangt.

## Patentansprüche

1. Pumpenaggregat (10) für eine schlupfgeregelte, hydraulische Fahrzeugbremsanlage, mit einem Pumpenmotor, mit welchem ein Exzenter (18) rotierend antreibbar ist, mit einem Pumpenkolben (16) , der in einer Zylinderbohrung (14) in einem Pumpengehäuse (12) axial verschieblich aufgenommen und der mit dem Exzenter (18) zu einer axial hinund hergehenden Hubbewegung antreibbar ist, mit einer dem Exzenter (18) zugewandten Dichtung (54) und mit einem Ablauf (60) zum Ableiten von Leckageflüssigkeit, **dadurch gekennzeichnet, dass** der Ablauf (60) zwischen der dem Exzenter (18) zugewandten Dichtung (54) und dem Exzenter (18) in die Zylinderbohrung (14) mündet.

2. Pumpenaggregat nach Anspruch 1, **dadurch gekennzeichnet, daß** das Pumpengehäuse (12) eine exzenterseitig von der Dichtung (48) angeordnete, den Pumpenkolben (16) umgebende Nut (52) aufweist, in die der Ablauf (60) mündet.

3. Pumpenaggregat nach Anspruch 2, **dadurch gekennzeichnet, daß** in die Nut (52) ein flüssigkeitsdurchlässiger Ring (56) eingesetzt ist.

4. Pumpenaggregat nach Anspruch 3, **dadurch gekennzeichnet, daß** der Ring (56) aus einem porösen Material besteht.

5. Pumpenaggregat nach Anspruch 3, **dadurch gekennzeichnet, daß** der Ring (56) ein Führungselement für den Pumpenkolben (16) bildet.

6. Pumpenaggregat nach Anspruch 3, **dadurch gekennzeichnet, daß** eine den Ring (56) umgebende Freinut (62) vorgesehen ist, in die der Ablauf (54) mündet.

7. Pumpenaggregat nach Anspruch 1, **dadurch gekennzeichnet, daß** der Ablauf (60) schräg im Pumpengehäuse (12) angebracht ist.

## Claims

1. Pump assembly (10) for a slip-controlled hydraulic vehicle brake system, with a pump motor, by means of which an eccentric (18) can be driven in rotation, with a pump piston (16) which is received axially displaceably in a cylinder bore (14) in a pump casing (12) and which can be driven in an axial to-and-fro lifting movement by means of the eccentric (18), with a seal (54) facing the eccentric (18) and with an outflow (60) for the discharge of leakage fluid, **characterized in that** the outflow (60) issues into the cylinder bore (14) between the seal (54) facing the eccentric (18) and the eccentric (18).

2. Pump assembly according to Claim 1, **characterized in that** the pump casing (12) has a groove (52) which is arranged on the eccentric side of the seal (48) and surrounds the pump piston (16) and into which the outflow (60) issues.

3. Pump assembly according to Claim 2, **characterized in that** a fluid-permeable ring (56) is inserted into the grove (52).

4. Pump assembly according to Claim 3, **characterized in that** the ring (56) consists of a porous material.

5. Pump assembly according to Claim 3, **characterized in that** the ring (56) forms a guide element for the pump piston (16).

6. Pump assembly according to Claim 3, **characterized in that** a free groove (62) which surrounds the ring (56) and into which the outflow (54) issues is provided.

7. Pump assembly according to Claim 1, **characterized in that** the outflow (60) is formed obliquely in the pump casing (12).

## Revendications

1. Groupe motopompe (10) pour un dispositif de freinage hydraulique à régulation antipatinage d'un véhicule, comprenant un moteur qui peut entraîner en rotation un excentrique (18) et qui possède un piston (16) pouvant coulisser axialement dans un alésage (14) du boîtier (12) de la pompe en étant entraîné en va-et-vient par l'excentrique (18), ainsi qu'un joint d'étanchéité entourant le piston du côté de l'excentrique (18) et une sortie (60) pour évacuer un liquide de fuite,
**caractérisé en ce que**
la sortie (60) débouche dans l'alésage de cylindre (14) entre le joint d'étanchéité situé vers l'excentrique (18) et cet excentrique lui-même.

2. Groupe motopompe selon la revendication 1,
**caractérisé en ce que**
le boîtier de pompe (12) présente, entourant le piston de pompe (16), une rainure périphérique (52) qui est située du côté de l'excentrique par rapport au joint d'étanchéité (48) et dans laquelle débouche la sortie (60).

3. Groupe motopompe selon la revendication 2,
**caractérisé en ce que**
dans la rainure (52) est insérée une bague (56) perméable aux liquides.

4. Groupe motopompe selon la revendication 3,
**caractérisé en ce que**
la bague (56) est faite d'un matériau poreux.

5. Groupe motopompe selon la revendication 3,
**caractérisé en ce que**
la bague (56) constitue un élément de guidage pour le piston de pompe (16).

6. Groupe motopompe selon la revendication 3,
**caractérisé en ce que**
la bague (56) est entourée par une rainure libre (62) dans laquelle débouche la sortie (54).

7. Groupe motopompe selon la revendication 1,
**caractérisé en ce que**
la sortie (60) est disposée obliquement dans le boîtier de pompe (12).
